(19) Europäisches Patentamt

European Patent Office

Office européen des brevets

(11) Veröffentlichungsnummer: **0 240 007 B1**

(12) **EUROPÄISCHE PATENTSCHRIFT**

(45) Veröffentlichungstag der Patentschrift:
17.10.90

(21) Anmeldenummer: 87104831.0

(22) Anmeldetag: 01.04.87

(51) Int. Cl.⁵: **A61C 19/00**

(54) **Dentales Bestrahlungsgerät.**

(30) Priorität: 03.04.86 DE 3611132

(43) Veröffentlichungstag der Anmeldung:
07.10.87 Patentblatt 87/41

(45) Bekanntmachung des Hinweises auf die Patenterteilung:
17.10.90 Patentblatt 90/42

(84) Benannte Vertragsstaaten:
AT CH DE FR GB LI

(56) Entgegenhaltungen:
EP-A- 0 058 884
EP-A- 0 125 558
EP-A- 0 169 803
DE-A- 2 204 862
DE-A- 2 507 601
DE-U- 1 910 256
DE-U- 8 504 351
US-A- 3 641 332
US-A- 4 011 403

(73) Patentinhaber: THERA Patent GmbH & Co. KG
Gesellschaft für industrielle Schutzrechte, Griesberg 2,
D-8031 Seefeld 1(DE)

(72) Erfinder: Herold, Wolf-Dietrich, Dr.-Ing., Höhenweg 13,
D-8031 Seefeld 2(DE)
Erfinder: Lucks, Karlfried Dr., Hauptstrasse 30,
D-8031 Seefeld 1(DE)

(74) Vertreter: Strehl, Schübel-Hopf, Groening,
Maximilianstrasse 54 Postfach 22 14 55,
D-8000 München 22(DE)

## Beschreibung

Ein dentales Bestrahlungsgerät gemäß dem ersten Teil des Anspruchs 1 ist aus DE-A-2 507 601 bekannt. Der bei diesem Gerät vorgesehene Lichtleiter weist über seine wesentliche Länge einen konstanten Durchmesser auf, der in der Praxis etwa 8 mm beträgt, ist nahe seinem Austrittsende um einen Winkel von etwa 60° gekrümmt und an seiner Spitze mit einem konischen Bereich versehen, in dem er sich zu einer kleineren Austrittsfläche verjüngt. Ein Gerät mit einem ähnlich gestalteten Lichtleiter, jedoch ohne konischen Bereich an der Spitze, ist in DE-A-2 901 534 beschrieben. Mit den bekannten Geräten lassen sich photopolymerisierbare Zahnfüllungen durch okklusale Bestrahlung in situ aushärten.

Strahlungshärtende Materialien weisen einen Polymerisationsschrumpf auf, der mit zunehmender Polymerisationstemperatur größer wird. Da das Füllmaterial stets zur Strahlung hin schrumpft, besteht bei rein okklusaler Bestrahlung die Tendenz, daß das Material vom Boden bzw. von den Rändern der Kavität abhebt.

Dieser Tendenz läßt sich dadurch entgegenwirken, daß das in die Kavität eingebrachte Füllungsmaterial vom Boden bzw. von den Rändern der Kavität her mit Strahlung beaufschlagt wird. Dazu ist es notwendig, entweder den Zahn selbst mit entsprechend hoher Intensität zu durchstrahlen oder bei mehrflächigen Füllungen die Strahlung interdentalapical an das Füllungsmaterial zu bringen. Beides ist mit den herkömmlichen Lichtleitern praktisch nicht möglich.

Der Erfindung liegt die Aufgabe zugrunde, ein dentales Bestrahlungsgerät mit einem Lichtleiter anzugeben, der es gestattet, einzelne Zahnbereiche in situ aus möglichst jeder beliebigen Richtung mit einer Intensität zu bestrahlen, die ausreicht, um photopolymerisierbare Füllungen, ausgehend von den Kavitätenwandungen, auszuhärten.

Die erfindungsgemäße Lösung dieser Aufgabe ist im Anspruch 1 angegeben.

Bei dem erfindungsgemäßen Bestrahlungsgerät ergibt sich aufgrund des Einstrahlwinkels sowie der Konizität des Lichtleiters und der damit verbundenen vergrößerten Strahlungsdivergenz an der Austrittsfläche des Lichtleiters eine weitgehend halbkugelförmige Abstrahlung von etwa konstanter Strahlungsdichte, was bedeutet, daß das Lichtleiterende in praktisch jeder beliebigen Ausrichtung an die zu bestrahlende Stelle herangeführt werden kann und trotzdem eine zuverlässige Aushärtung des Materials erreicht wird. Dies ist wegen der räumlichen Enge insbesondere im Interdentalbereich oder bei der Aushärtung von distalen molaren Füllungen von großer Bedeutung. Wegen der konstanten Strahlungsdichte is dabei trotz hoher Bestrahlungsstärke nicht zu befürchten, daß das Füllungsmaterial mit zu hoher Strahlungsintensität beaufschlagt und damit zu stark erwärmt wird.

Ferner läßt sich bei Verwendung von transparenten Interdentalkeilen eine sehr hohe Strahlungsmenge in das nur schmale axiale Ende des Keils einkoppeln, die von den Keilflächen lateral abgegeben wird und eine Härtung des Füllungsmaterials, ausgehend vom proximal-apicalen Bereich, bewirkt.

Gleichzeitig weist der konische Lichtleiter bei einer Eintrittsfläche, die zur Aufnahme einer entsprechenden Strahlungsleistung genügend groß ist, ein verhältnismäßig kleines Austrittsende auf, mit dem sich interdentale Stellen direkt bestrahlen lassen, die mit einem üblichen Lichtleiter nicht erreicht werden können. Aufgrund der Durchmesserverringerung wird an der Austrittsfläche eine hohe Bestrahlungsstärke erreicht, mit der sich selbst relativ starke Dentinschichten durchstrahlen lassen. Man erhält im Zahninnern, ausgehend von der Kavitätenwandung, eine intensive Aushärtung des Füllmaterials, das fest an der Zahnwandung anliegt.

Die ferner vorgesehene ballige Form an der Austrittsfläche des Lichtleiters dient dazu, ein Abfallen der Strahlungsintensität in der Nähe des Winkels von 90° zur optischen Achse an der Austrittsfläche weitgehend zu vermeiden und den Strahlungsaustritt näher an Füllungen in Interdentalräumen heranzuführen.

Aus US-A 4 011 403 ist ein Bestrahlungsgerät bekannt, das die Merkmale des ersten Teils des Anspruchs 1 aufweist und bei dem das von der Lampe erzeugte Strahlungsbündel einen Konvergenzwinkel von kleiner als 30° bezüglich der optischen Achse hat und der Lichtleiter von der Eintrittsfläche zur Austrittsfläche abnehmend konisch gestaltet ist. Bei dem bekannten Gerät weist jedoch der Lichtleiter keine ballig geformte Austrittsfläche auf, die im dentalen Einsatzbereich aus den obengenannten Gründen von Bedeutung ist.

Aus DE-U 8 504 351 ist ein Lichtleiter für ein dentales Bestrahlungsgerät bekannt, der zwar einen sich von einer Eintrittsfläche konisch verjüngenden Abschnitt aufweist, doch geht dieser in einen sich zur Austrittsfläche wieder erweiternden Abschnitt über, wobei die Austrittsfläche größer als die Eintrittsfläche ist. Dieser bekannte Lichtleiter dient dazu, größere Flächen möglichst gleichmäßig mit parallelem Licht zu bestrahlen, wobei es darauf ankommt, daß die Austrittsfläche des Lichtleiters im wesentlichen bündig auf die zu härtende Fläche aufgesetzt wird.

In der Weiterbildung der Erfindung nach Anspruch 2 ist der Brechungsindex des Lichtleiters so gewählt, daß das in den Lichtleiter eingestrahlte konvergente Strahlungsbündel der Lampe einen möglichst großen Winkel aufweisen kann, ohne daß die Strahlung an der Austrittsfläche total-reflektiert wird. Ein großer Konvergenzwinkel des von der Lampe abgegebenen Strahlungsbündels bedeutet dabei, daß bei Verwendung einer im wesentlichen punktförmigen Lichtquelle mit einem ellipsoidförmigen Reflektor dieser bei einer gegebenen Ausnutzung der Gesamtstrahlung in Richtung der optischen Achse verhältnismäßig kurz sein kann. Wird der Brechungsindex verkleinert, so wird auch der Austrittswinkel kleiner. Die Ausgestaltungen nach den Ansprüchen 3 und 4 entsprechen einer in der Praxis bevorzugten Gestaltung, bei der der Lichtleiter insgesamt eine handliche Form erhält und in Zusammenhang mit verfügbaren Lampen und Bestrahlungsgeräten verwendet werden kann, wobei die

insgesamt verfügbare Strahlungsmenge gut ausgenutzt wird. Die Weiterbildung der Erfindung nach Anspruch 5 erweist sich als günstig, um auch schwer zugängliche Zahnbereiche zu erreichen. Dabei ist die Gestaltung nach Anspruch 6 zweckmäßig, um ein Austreten von Strahlung aus der Mantelfläche des gekrümmten Lichtleiterbereiches zu vermeiden. Die Ausgestaltung der Erfindung nach Anspruch 7 stellt eine weitere Maßnahme dar, den Strahlenaustritt näher an Füllungen in Interdentalräumen zu bringen.

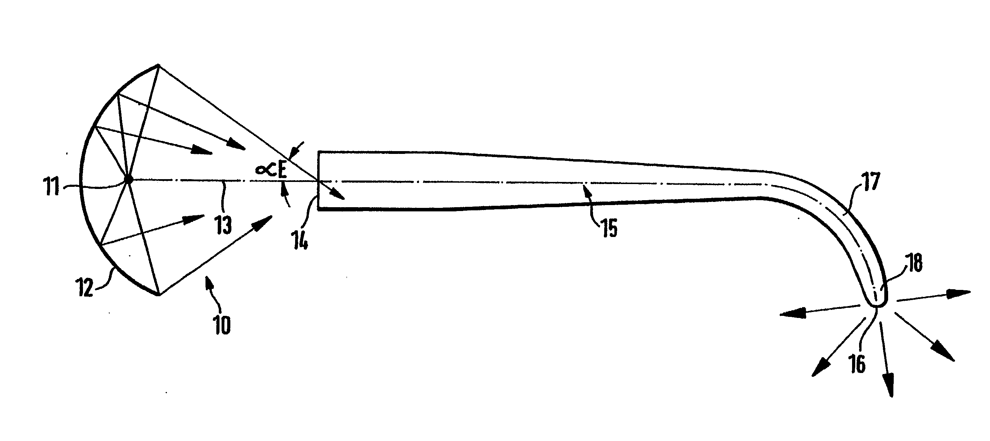

Ein bevorzugtes Ausführungsbeispiel der Erfindung wird nachstehend anhand der Zeichnung näher erläutert, die eine schematische Darstellung einer Lampe und eines Lichtleiters zeigt.

Die in der Zeichnung gezeigte Lampe 10 weist eine im wesentlichen punktförmige Strahlungsquelle 11 auf, die in einem Brennpunkt eines ellipsoidförmigen Reflektors 12 angeordnet ist. Die Lampe 10 erzeugt ein konvergentes Lichtbündel, dessen Winkel $\alpha E$ bezüglich der optischen Achse 13 etwa 30° beträgt. In oder nahe dem zweiten Brennpunkt des Reflektors 12 ist die Eintrittsfläche 14 eines Lichtleiters 15 angeordnet, dessen optische Achse an der Eintrittsfläche 14 mit der optischen Achse 13 des Reflektors 12 zusammenfällt. Der Lichtleiter 15 weist eine ballige Austrittsfläche 16, nahe dieser einen gekrümmten Bereich 17 mit konstantem Durchmesser und unmittelbar vor der Austrittsfläche 16 einen Bereich 18 mit stärkerem Konuswinkel als zwischen der Eintrittsfläche 14 und dem gekrümmten Bereich 17 auf.

Der insgesamt kreisförmig-konische Lichtleiter 15 hat folgende Abmessungen:

Durchmesser d1 der Eintrittsfläche 14:10 mm
Durchmesser d2 der Austrittsfläche 16:3 mm
Gestreckte Länge des gesamten Lichtleiters:ca. 100 mm
Länge des geraden Teils des Lichtleiters von der Eintrittsfläche 14 bis zum Beginn des gekrümmten Teils 17:ca. 75 mm
Durchmesser des Lichtleiters im gekrümmten Bereich 17:4 mm
Radius der Mittellinie des gekrümmten Teils 17:20 mm
Krümmungswinkel:ca. 75°
Länge des stärker konischen Bereichs 18, in dem der Durchmesser von 4 mm auf 3 mm abnimmt:5 mm

Der Lichtleiter 15 besteht aus Quarz mit einem Brechungsindex von ca. 1,46, was ungefähr dem Wert $\sqrt{2}$ entspricht. Der Lichtleiter kann dabei als Vollstab ausgebildet sein oder sich aus mehreren diskreten Lichtleitfasern zusammensetzen. Außer Quarz kommen als Material auch Glas oder Kunststoff in Betracht.

Bei diesen Werten wird ein Lichtstrahl, der unter einem Einfallswinkel $\alpha E$ von circa 22° auf die Eintrittsfläche 14 fällt, durch den Lichtleiter 15 bis zur Austrittsfläche 16 transmittiert, wo er unter dem Grenzwinkel der Totalreflektion eintrifft und die Austrittsfläche unter einem Winkel von 90° streifend verläßt. Strahlen, die die Eintrittsfläche 14 unter kleineren Winkeln treffen, verlassen die Austrittsfläche 16 unter entsprechend kleineren Winkeln. Daraus ergibt sich eine insgesamt halbkugelförmige Abstrahlung an der Austrittsfläche 16.

Strahlen, die die Eintrittsfläche 14 unter Winkeln von circa 22 bis 30° treffen, verlassen den Lichtleiter seitlich vor der Austrittsfläche 16 und zwar etwa innerhalb desjenigen Bereichs, in dem der Durchmesser kleiner als etwa 3,6 mm geworden ist. Es ist deshalb zweckmäßig, den Eintrittswinkel $\alpha E$ größer zu wählen als es demjenigen Wert (circa 22°) entspricht, bei dem alle Strahlung bis zur Austrittsfläche transmittiert wird, um zu erreichen, daß an der Austrittsfläche 16 auch unter großen Winkeln zur optischen Achse noch Strahlung ausreichender Intensität vorhanden ist. Da der unmittelbar vor der Austrittsfläche 16 gelegene Bereich 18 verhältnismäßig stärker konisch geformt ist als der übrige Lichtleiter, tritt die die Austrittsfläche 16 nicht mehr erreichende Strahlung erst ganz kurz vor dieser aus und vergrößert die Nutzstrahlung bei seitlichem Anlegen des Stabes.

Hat das Verhältnis des Brechungsindex des Lichtleiters zu dem der Umgebung den oben angegebenen Wert von $\sqrt{2}$, so bedeutet dies, daß jeder Lichtstrahl, den der Lichtleiter führt, an der Austrittsfläche 16 austritt und daß der größe Austrittswinkel 90° beträgt. Bei kleinerem Brechungsindexverhältnis wird der maximale Austrittswinkel kleiner als 90°; wird in diesem Fall der Einfallswinkel $\alpha E$ erhöht, so tritt bereits Abstrahlung vom Mantel des Lichtleiters auf. Wird das Brechungsindexverhältnis größer als $\sqrt{2}$ gemacht, so wird ein Teil der durch den Lichtleiter transmittierten Strahlung an der Austrittsfläche 16 total reflektiert; dies läßt sich zwar durch Verringerung des Einfallswinkels $\alpha E$ vermeiden, doch geht dann entweder ein entsprechender Teil des von der Lampe 10 abgegebenen Strahlungsbündels verloren, oder der ellipsoidförmige Reflektor 12 muß so geformt werden, daß er die Strahlungsquelle 11 weiter umgibt, wobei er eine größere axiale Länge erhält und damit die Abmessungen der Lampe 10 insgesamt vergrößert.

Wird die Austrittsfläche 16 im Gegensatz zu dem beschriebenen Ausführungsbeispiel eben gestaltet, so ziegt sich, daß in einem Bereich von etwa 85 bis 90° zur optischen Achse die Strahlungsintensität abnimmt und eine dunkle Zone entsteht. Durch ballige Gestaltung der Austrittsfläche 16 läßt sich diese dunkle Zone vermeiden.

## Patentansprüche

1. Dentales Bestrahlungsgerät, umfassend eine Lampe (10) zur Erzeugung eines konvergenten Strahlungsbündels und einen Lichtleiter (15) mit einer in dem Strahlungsbündel angeordneten Eintrittsfläche (14), einem konischen Bereich und einer auf den Behandlungsort richtbaren Austrittsfläche (16), dadurch gekennzeichnet,
daß das von der Lampe (10) erzeugte Strahlungsbündel einen Konvergenzwinkel ($\alpha E$) von kleiner als etwa 30°C bezüglich der optischen Achse (13) aufweist,

daß der Lichtleiter (15) über einen wesentlichen Teil seiner Länge mit von der Eintrittsfläche (14) zur Austrittsfläche (16) abnehmendem Durchmesser konisch gestaltet ist, und
daß die Austrittsfläche (16) ballig geformt ist.

2. Bestrahlungsgerät nach Anspruch 1, dadurch gekennzeichnet, daß das Material des Lichtleiters ein Berechnungsindexverhältnis gegenüber der Umgebung von größer als etwa 1,3, vorzugsweise etwa √2, aufweist.

3. Bestrahlungsgerät nach Anspruch 1 oder 2, dadurch gekennzeichnet, daß das Verhältnis des Durchmessers der Austrittsfläche (16) zu dem der Eintrittsfläche (14) des Lichtleiters (15) zwischen etwa 0,5 und 0,2, vorzugsweise bei etwa 0,3, liegt.

4. Bestrahlungsgerät nach Anspruch 1 oder 2, dadurch gekennzeichnet, daß der Lichtleiter (15) an seiner Eintrittsfläche (14) einen Durchmesser von etwa 10 mm und an seiner Austrittsfläche (16) einen solchen von etwa 3 mm aufweist und eine Länge von etwa 100 mm hat.

5. Bestrahlungsgerät nach einem der Ansprüche 1 bis 4, dadurch gekennzeichnet, daß der Lichtleiter (15) in seinem der Austrittsfläche (16) benachbarten Bereich (17) um einen von etwa 60 bis 90°, vorzugsweise 75°, gekrümmt ist.

6. Bestrahlungsgerät nach Anspruch 5, dadurch gekennzeichnet, daß der Durchmesser des Lichtleiters (15) im gekrümmten Bereich (17) im wesentlichen konstant ist.

7. Bestrahlungsgerät nach einem der Ansprüche 1 bis 6, dadurch gekennzeichnet, daß der Lichtleiter (15) unmittelbar vor seiner Austrittsfläche (16) einen Bereich (18) aufweist, in dem sein Konuswinkel größer ist als über seine übrige Länge und der Durchmesser sich so weit verringert, daß in einem Bereich bis zu etwa 20 mm vor der Austrittsfläche (16) Strahlung auch durch die konische Mantelfläche austritt.

**Claims**

1. Dental irradiation apparatus comprising a lamp (10) for producing a convergent beam of radiation and an optical waveguide (15) having an entrance surface (14) disposed in the beam, a conical portion and an exit surface (16) adapted to be directed towards the location to be irradiated, characterised in that the beam of radiation produced by the lamp (10) has an angle of convergence (αE) smaller than approximately 30° with respect to the optical axis (13), that the waveguide (15) is conically shaped over a substantial part of its length with a diameter decreasing from the entrance surface (14) to the exit surface (16); and that the exit surface (16) is crown-shaped.

2. The irradiation apparatus of claim 1, characterised in that the material of the waveguide has a refractive index ratio with respect to the environment of greater than approximately 1.3, preferably √2.

3. The irradiation apparatus of claim 1 or 2, characterised in that the ratio of the diameter of the exit surface (16) to that of the entrance surface (14) of the waveguide (15) is between about 0.5 and about 0.2, preferably at about 0.3.

4. The irradiation apparatus of claim 1 or 2, characterised in that the the waveguide (15) has at its entrance surface (14) a diameter of approximately 10 mm and at its exit surface (16) a diameter of approximately 3 mm, and has a length of approximately 100 mm.

5. The irradiation apparatus of any one of claims 1 to 4, characterised in that the waveguide (15) is bent about an angle of approximately 60 to 90°, preferably 75°, in its portion (17) adjacent the exit surface (16).

6. The irradiation apparatus of claim 5, characterised in that the diameter of the waveguide (15) in the bent portion (17) is substantially constant.

7. The irradiation apparatus of any one of claims 1 to 6, characterised in that the waveguide (15) immediately before its exit surface (16) has a portion (18) in which its cone angle is greater than over its remaining length and the diameter decreases to such an extent that radiation exits also through the conical peripheral surface in a region up to approximately 20 mm from the exit surface (16).

**Revendications**

1. Appareil d'irradiation dentaire, comprenant une lampe (10) pour la génération d'un faisceau de rayonnement convergent et un guide de lumière (15) avec une surface d'entrée (14) disposée dans le faisceau de rayonnement, une section conique et une surface de sortie (16) pouvant être dirigée vers le lieu de traitement, caractérisé en ce que le faisceau de rayonnement généré par la lampe (10) présente un angle de convergence (αE) inférieur à environ 30° par rapport à l'axe optique (13); que le guide de lumière (15) présente, sur une partie importante de sa longueur, une forme conique avec diminution du diamètre de la surface d'entrée (14) en direction de la surface de sortie (16); et que la surface de sortie (16) présente une forme bombée.

2. Appareil d'irradiation selon la revendication 1, caractérisé en ce que le matériau du guide de lumière présente par rapport au milieu environnant un indice de réfraction supérieur à environ 1,3, de préférence de √2.

3. Appareil d'irradiation selon l'une des revendications 1 ou 2, caractérisé en ce que le rapport du diamètre de la surface de sortie (16) à celui de la surface d'entrée (14) du guide de lumière (15) se situe entre environ 0,5 et 0,2, de préférence à environ 0,3.

4. Appareil d'irradiation selon l'une des revendications 1 ou 2, caractérisé en ce que le guide de lumière (15) présente à sa surface d'entrée (14) un diamètre d'environ 10 mm et à sa surface de sortie (16) un diamètre d'environ 3 mm et que sa longueur est d'environ 100 mm.

5. Appareil d'irradiation selon l'une des revendications 1 à 4, caractérisé en ce que le guide de lumière (15) est courbé, dans sa section (17) voisine de la surface de sortie (16), d'un angle de 60° à 90°, de préférence de 75°.

6. Appareil d'irradiation selon la revendication 5, caractérisé en ce que le diamètre du guide de lumière (15) est sensiblement constant dans la section courbe (17).

7. Appareil d'irradiation selon l'une des revendications 1 à 6, caractérisé en ce que le guide de lumière (15) présente, immédiatement en amont de sa surface de sortie (16), une section (18) dans laquelle son angle de cône est plus grand que sur le reste de sa longueur et que le diamètre est diminué de telle façon que, dans une zone jusqu'à environ 20 mm en amont de la surface de sortie (16), le rayonnement émerge également par la surface conique de l'enveloppe.